# EUROPEAN PATENT SPECIFICATION

(11) **EP 2 937 513 B1**
(45) Date of publication and mention of the grant of the patent: **26.08.2020**
(21) Application number: 15164246.9
(22) Date of filing: 20.04.2015
(51) Int. Cl.: F01D 5/18, F01D 5/28

(54) **METHOD OF FORMING A COMPONENT**
HERSTELLUNGSVERFAHREN FÜR EIN BAUTEIL
PROCÉDÉ DE MANUFACTURE D'UN COMPOSANT

(30) Priority: 25.04.2014 US 201461984064 P; 05.03.2015 US 201514639507
(43) Date of publication of application: 28.10.2015
(73) Proprietor: United Technologies Corporation, Farmington, CT 06032 (US)
(72) Inventor: Lewis, Scott D., Vernon, Connecticut 06066 (US); Patel, Gaurav M., Glastonbury, Connecticut 06033 (US); Hembree, Jeffrey Scott, Ellington, Connecticut 06029 (US); Quach, San, East Hartford, Connecticut 06108 (US); Zelesky, Mark F., Bolton, Connecticut 06043 (US); Candelori, David J., Glastonbury, Connecticut 06033 (US); Mongillo, Dominic J., West Hartford, Connecticut 06107 (US)
(74) Representative: Dehns

(56) References cited:
- EP-A2- 1 174 587
- EP-A2- 2 546 464
- EP-A2- 2 666 964
- WO-A1-2014/031189
- CA-A1- 2 282 010
- JP-A- 2001 012 204
- US-A- 4 529 358
- US-A- 5 941 686
- US-A1- 2011 123 312
- US-B1- 8 245 519

## Description

### TECHNICAL FIELD

This application relates to the design of cooling holes for use in gas turbine engine components.

### BACKGROUND ART

Gas turbine engines are known and, typically, include a fan delivering air into a compressor. The air is compressed and delivered into a combustion section. In the combustion section, the air is mixed with fuel and ignited. Products of this combustion pass downstream over turbine rotors, driving them to rotate.

As known, the products of combustion are extremely hot. Thus, turbine rotors and static vanes (which are positioned intermediate rows of turbine rotor blades), seals and many other components, are formed with cooling passages to deliver cooling air to maintain the component at a lower temperature.

Known cooling schemes are extremely precise. In particular, one type of cooling scheme delivers film cooling to the outer surface of a component. As an example, an airfoil in a turbine blade is formed with film cooling holes having a very precisely designed and controlled size and shape, such that air is delivered in desired directions and in desired amounts along an outer surface of the airfoil

It is also known to deposit outer coatings to assist the components in surviving the high temperature. Such thermal barrier coatings are typically applied after formation of the cooling holes. In the past, the thermal barrier coatings have sometimes blocked or at least altered the shape of the cooling holes, such as a film cooling hole.

CA 2282010 A1 discloses a method having the features of the preamble of claim 1. Further methods of forming cooling holes are disclosed in US 5941686 A, EP 2546464 and EP 2666964 A2. Cooling holes are disclosed in JP 2001 012204 A and US 8245519 A.

### SUMMARY OF THE INVENTION

The present invention provides a method of forming a component for use in a gas turbine engine, as set forth in claim 1.

In an embodiment according to the previous embodiment, the enlarged area is in the diffusor section.

In another embodiment according to the last embodiment, the meter section has a generally constant cross-section.

In another embodiment according to the last embodiment, the meter section is generally cylindrical.

In another embodiment according to the last but one embodiment, the meter section has a crescent shape.

In another embodiment according to the last embodiment, the crescent shape has ends extending upwardly toward an outer skin on the component.

In another embodiment according to any of the previous embodiments, the component is for use in a turbine section of a gas turbine engine.

In another embodiment according to any of the previous embodiments, the component is a turbine blade.

In another embodiment according to any of the previous embodiments, an amount of expected deposition of the coating is determined experimentally.

In another embodiment according to any of the previous embodiments, the amount of deposition of the coating into the cooling hole is determined theoretically.

In another embodiment according to any of the previous embodiments, the intermediate cooling hole is formed by being drilled into an outer surface of the component.

These and other features may be best understood from the following drawings and specification.

### BRIEF DESCRIPTION OF THE DRAWINGS

Figure 1 schematically shows a gas turbine engine.
Figure 2 schematically shows a turbine blade.
Figure 3A shows a first view of a prior art film cooling hole as drilled before a thermal barrier coating is applied.
Figure 3B shows the prior art Figure 3A cooling hole after a thermal barrier coating is applied.
Figure 4A shows a first step in designing and forming a cooling hole.
Figure 4B shows the Figure 4A cooling hole after a thermal barrier coating is applied.
Figure 4C is a flow chart of the methodology to develop the cooling hole shape so that the hole is less sensitive to thermal barrier coatings.
Figure 5A shows a cooling hole that may be formed by the method of Figures 4A-C.
Figure 5B is another view of the Figure 5A cooling hole.
Figure 6A shows a first view of an alternative meter section shape.
Figure 6B shows the meter section shape of Figure 6A incorporated into a cooling hole.
Figure 6C shows the reverse side of Figure 6B.

### DETAILED DESCRIPTION

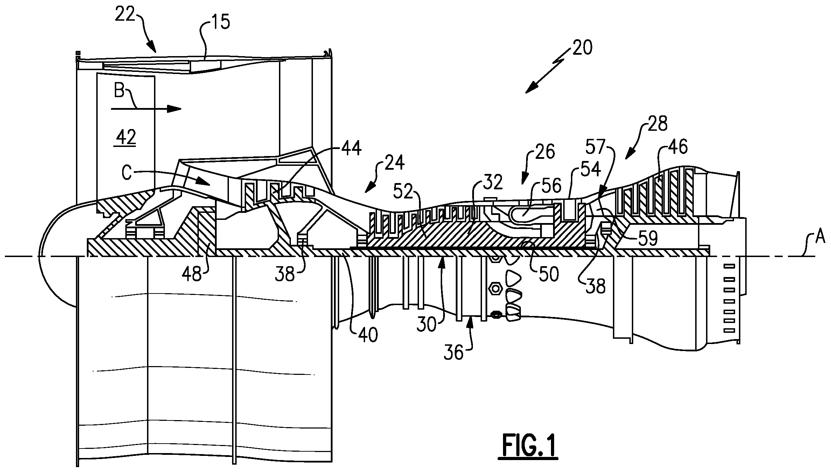

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

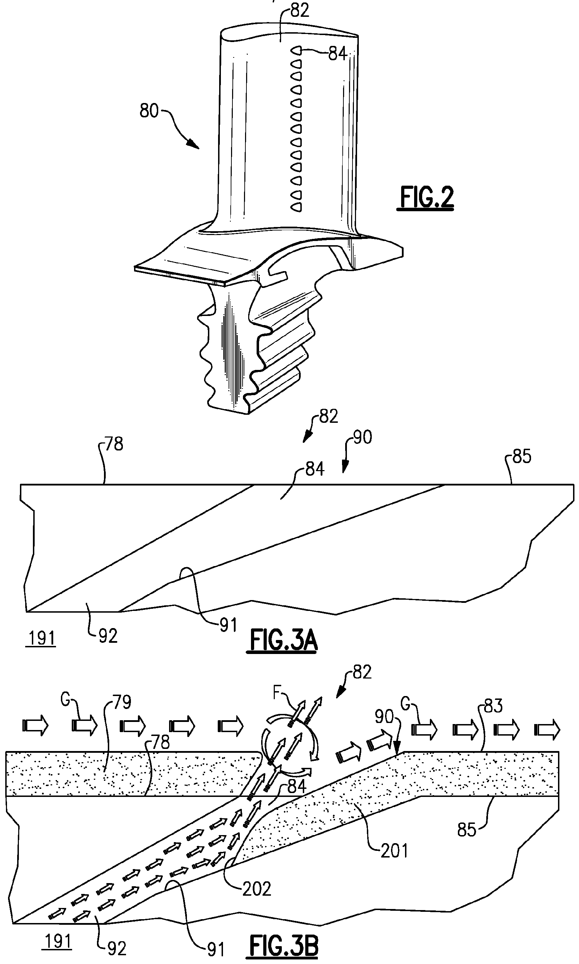

Figure 2 shows a turbine blade 80 having an airfoil 82 provided with a plurality of film cooling holes 84. As known, the film cooling holes 84 receive cooling air from internal cavities and spread that air along a skin surface of the airfoil 82. While this disclosure specifically illustrates a turbine blade 80, it should be understood that its teachings can extend to any number of other components which receive cooling air in a gas turbine engine including turbine vanes and blade outer air seals (BOAS). The airfoil 82 would be replaced with a body of these other components which includes the cooling holes.

Figure 3A shows a side view of a film cooling hole 84 which depicts the prior art. As shown, the film cooling hole 84 extends to an outer surface 85 of the airfoil 82. This figure depicts the shape of the cooling hole as it is drilled before a thermal barrier coating is applied.

A meter section 92 receives air from a cooling air cavity 191. In one embodiment, the meter section 92 has a generally constant cross-section and may be cylindrical. Air downstream of the meter section 92 passes into a transition section 91 wherein a cross-sectional area increases and to a diffusor section 90 at which the air is diffused or spread out and along the surface 83 of the airfoil 82.

Figure 3B shows a side view of a film cooling hole, Figure 3A, after a thermal barrier coating is applied. As shown, the film cooling hole 84 extends to an outer surface 85 of the airfoil 82. As shown in this figure, there is a thermal barrier coating 79 outwardly of an outer skin 78 of the airfoil 82. As shown at 201, the coating blocks the diffusor section considerably which significantly degrades the film effectiveness. An edge 202 of this coating blockage causes the coolant air F to exit the hole at non-ideal conditions that can result in coolant blow-off. This coolant blow-off occurs when the coolant air is forced to exit at high velocities at angles that are far from being parallel to the downstream surface. This condition results in the coolant air providing minimal cooling to the downstream surface as it is shooting into the hot gaspath air. As shown, gas path flow G is on surface 83. There is an undesired deposition 201 of the coating. Thus, the shape of the hole, which has been precisely designed, is no longer as desired.

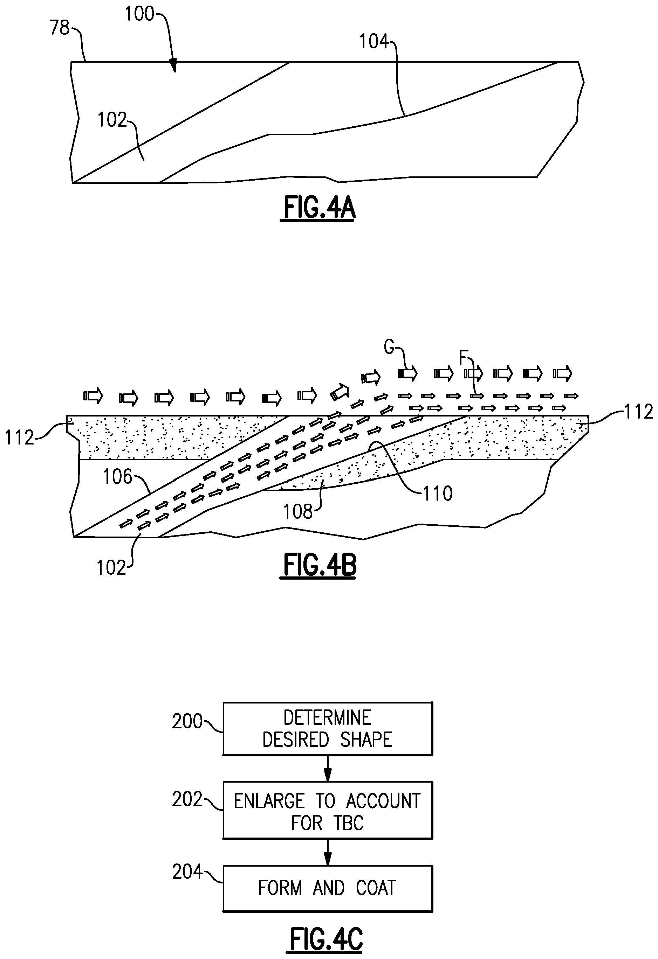

Figure 4A shows a first film cooling hole 100 after it has been drilled, but before a thermal barrier coating has been applied and is improved over the prior art cooling hole in Figure 3A. Figure 4B shows the Figure 4A cooling hole after a thermal barrier coating is applied. This drilled cooling hole Figure 4A offsets the drilled surface to account for the expected thermal barrier coating. The end result after the thermal barrier coating is applied is a surface that allows the coolant to diffuse downstream under better film cooling conditions. The Figure 4B is offset so that the coolant F can exit the hole at a low surface angle and a velocity that is not much higher (greater than four times) than the hot gaspath G air velocity.

A meter section 102 is drilled and a diffusor and transition section 104 may also be drilled. Figure 4A and 4B show the area 104 formed to be larger than the final desired shape, such that the undesired deposition of coating will only move the final shape back to the desired shape, as will be explained below.

As shown in Figure 4B, a thermal barrier coating 112 has been placed along an airfoil. When this occurs, thermal barrier coating, such as shown at 108, may move into the diffusor and transition sections 104. As mentioned above, this is a challenge in the prior art.

Thus, as shown in the flowchart of Figure 4C, a method according to this application includes a step 200 of initially determining a final desired shape for a cooling hole. As known, this is a precise science and even small deviations as may be caused by inadvertent deposition of a coating are detrimental. Thus, at step 202, the method provides an enlarged area intermediate the initially formed hole to account for the eventual deposition of a thermal barrier coating (TBC).

This may be performed experimentally by an iterative process wherein an intermediate hole is drilled and the coating is then deposited. Reverse engineering can then be performed to see how much thermal barrier coating has been deposited in this intermediate hole. Alternatively, the amount of extra material to be removed such that the final hole shape after deposition of the thermal barrier coating is as desired at step 200 is determined theoretically.

Alternatively, an amount of expected, unwanted deposition of the coating is determined experimentally, and/or theoretically.

Once the amount and location of enlargement has been determined, step 204, the intermediate hole of that shape and size is formed and the component is coated.

With the method of this application, the resulting cooling air holes 106 will be closer to a desired shape as the coating 110 creates a surface that approximates the desired shape (see Figure 4B).

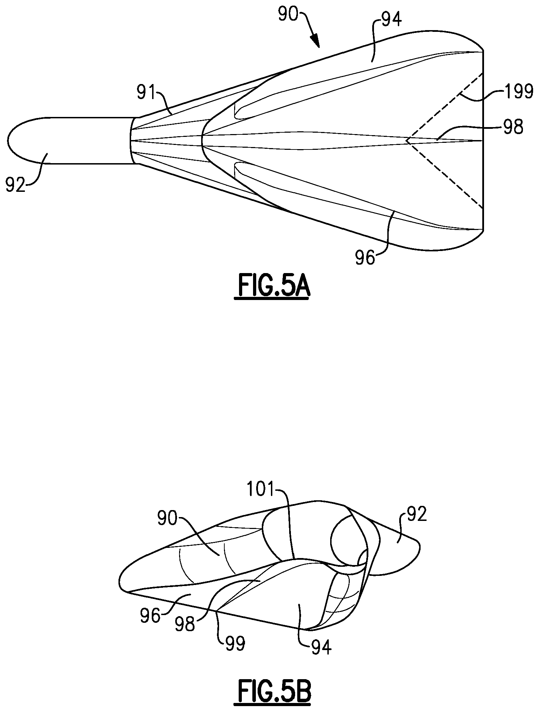

Figures 4A and B shows the solid airfoil body with the hole as a cavity, as it would exist in the real world. Figures 5A and 5B show the shape of the hole, which is a different way of illustrating the hole, compared to the Figure 4A/B rendering.

As shown, the transition section 91 extends in both directions along the surface of the airfoil 82 relative to the meter section 92. A central ridge 98 may be formed in the diffusor section 90 and serves to drive cooling air into side channels 94 and 96. This helps to force the air outwardly and better spread out along the surface 83 of the airfoil 82, as perhaps best illustrated in Figure 4B.

The diffusor section 90 includes ridge 98 and opposed side portions or channels 94 and 96. The ridge 98 extends closer to an outer surface 83 of the component 80 than do the side portions such that the central ridge 98 guides air into the side portions 94/96.

As shown in phantom at 199, the generally straight downstream end may be formed to be V-shaped, rather than the flat end as shown in Figure 5A.

Figure 5B shows another view of the cooling hole and shows that the ridge 98 may have a greater thickness at an intermediate position 101 than it may have at a downstream end 99.

While a particular cooling hole shape is shown, it should be understood that any other cooling hole shapes will benefit from the teachings of this application.

Various methods of forming the cooling hole may be utilized. As an example, electro-discharge machining, laser drilling or water jet drilling may be utilized. Also, two-step manufacturing methods may be used where one method is utilized to drill the meter section and another method drills the diffusor section. As an example, laser processes may be optimized for near surface cutting such as of the diffusor, and others may be optimized for protrusion cutting, such as the meter section. Thus, two different laser cutting processes can be utilized to drill the hole.

As shown in Figure 4B, a thermal barrier coating 112 is then placed along an airfoil. When this occurs, thermal barrier coating, such as shown at 108, may move into the diffuser and transition sections 104. As mentioned above, this is a challenge in the prior art. There is not an end of the coating blocking the airflow, and the airflow can flow along the skin as shown at F.

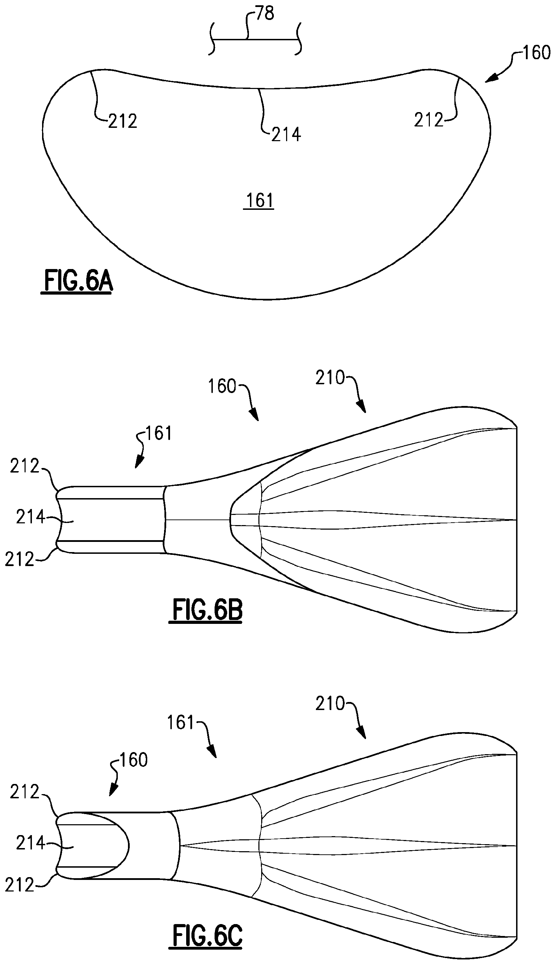

Figure 6A shows a cooling hole embodiment 160 wherein the meter section 102 of the earlier figures is replaced by a crescent shaped meter section 161. This may also have a constant shape. The use of this shape or similar shapes creates a counteracting rotation in the cooling air reaching the two side portions that will act in opposition to kidney vortices, which can be created by the products of combustion moving along the surface of the gas turbine engine component.

As shown in Figure 6A, ends 212 of the crescent shape extend toward the outer skin 78 of the component, with an intermediate back 214 extending from the ends 212 in a direction away from the outer skin 78. As shown, there are no sharp edges but instead the ends are formed generally along curves.

Figure 6B shows the cooling hole 160 has a diffusor section 210, and the crescent shaped meter section 161 as described above. It should be understood that this view is in a direction taken from the outer skin and looking inwardly to the component.

Figure 6C shows the reverse side of the hole, and shows the ends 212 curving away from the back and in a direction toward the outer skin.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A method of forming a component (80) for use in a gas turbine engine comprising the steps of:
(a) determining a desired shape for a cooling hole (84) on a gas turbine engine component (80);
(b) determining the likely deposition of a coating (110) to be provided on the component (80) into the cooling hole (106); and
(c) forming an intermediate cooling hole (100) that has an enlarged area from the desired shape to account for deposition of the coating (110); and
(d) then coating the component,
wherein the cooled hole (84) of desired shape includes a meter section (92) communicating with a cooling air cavity (191) and delivering air into a diffusor section (90), **characterised in that**:
the diffusor section (90) includes a ridge (98) and opposed side portions (94, 96) with the ridge (98) extending closer to an outer surface (83) of the component than do said side portions (94, 96) such that said ridge (98) guides air into said side portions (94, 96).

2. The method as set forth in claim 1, wherein said enlarged area is in said diffusor section (90).

3. The method as set forth in claim 2, wherein the meter section (92) has a generally constant cross-section.

4. The method as set forth in claim 3, wherein said meter section (92) is generally cylindrical.

5. The method as set forth in claim 3, wherein said meter section (92) has a crescent shape.

6. The method as set forth in claim 5, wherein said crescent shape has ends extending upwardly toward an outer skin on the component.

7. The method as set forth in any preceding claim, wherein said component is for use in a turbine section of a gas turbine engine, for example a turbine blade.

8. The method as set forth in any preceding claim, wherein an amount of expected deposition of the coating (110) is determined experimentally, and/or is determined theoretically.

9. The method as set forth in any preceding claim, wherein said intermediate cooling hole (100) is formed by being drilled into an outer surface (78) of said component (80).

10. The method as set forth in any preceding claim, wherein the intermediate cooling hole (100) is formed by a single manufacturing process or by two separate manufacturing processes.

11. The method as set forth in any preceding claim, wherein a downstream end of said intermediate cooling hole (100) has a V-shape or has a generally straight shape.

## Patentansprüche

1. Verfahren zum Herstellen eines Bauteils (80) zur Verwendung in einem Gasturbinentriebwerk, welches die folgenden Schritte umfasst:
(a) Bestimmen einer gewünschten Form für ein Kühlloch (84) auf einem Gasturbinentriebwerksbauteil (80);
(b) Bestimmen der wahrscheinlichen Ablagerung einer Beschichtung (110), die auf dem Bauteil (80) im Kühlloch (106) bereitzustellen ist; und
(c) Herstellen eines Zwischenkühllochs (100), das eine vergrößerte Fläche aufweist, aus der gewünschten Form, um die Ablagerung der Beschichtung (110) zu berücksichtigen; und
(d) dann Beschichten des Bauteils,
wobei das gekühlte Loch (84) der gewünschten Form einen Messabschnitt (92) beinhaltet, der mit einem Kühllufthohlraum (191) kommuniziert und Luft in einen Diffusorabschnitt (90) abgibt,
**dadurch gekennzeichnet, dass**:
der Diffusorabschnitt (90) eine Rippe (98) und gegenüberliegende Seitenteile (94, 96) beinhaltet, wobei sich die Rippe (98) näher zu einer Außenfläche (83) des Bauteils als zu den Seitenteilen (94, 96) erstreckt, sodass die Rippe (98) Luft in die Seitenteile (94, 96) leitet.

2. Verfahren nach Anspruch 1, wobei sich die vergrößerte Fläche in dem Diffusorabschnitt (90) befindet.

3. Verfahren nach Anspruch 2, wobei der Messabschnitt (92) einen im Allgemeinen konstanten Querschnitt aufweist.

4. Verfahren nach Anspruch 3, wobei der Messabschnitt (92) im Allgemeinen zylindrisch ist.

5. Verfahren nach Anspruch 3, wobei der Messabschnitt (92) eine Sichelform aufweist.

6. Verfahren nach Anspruch 5, wobei die Sichelform Enden aufweist, die sich nach oben in Richtung einer Außenverkleidung des Bauteils erstrecken.

7. Verfahren nach einem beliebigen vorhergehenden Anspruch, wobei das Bauteil in einem Turbinenabschnitt eines Gasturbinentriebwerks, zum Beispiel einer Turbinenschaufel, verwendet wird.

8. Verfahren nach einem beliebigen vorhergehenden Anspruch, wobei eine Menge der erwarteten Ablagerung der Beschichtung (110) experimentell bestimmt wird und/oder theoretisch bestimmt wird.

9. Verfahren nach einem beliebigen vorhergehenden Anspruch, wobei das Zwischenkühlloch (100) durch Bohren in eine Außenfläche (78) des Bauteils (80) hergestellt wird.

10. Verfahren nach einem beliebigen vorhergehenden Anspruch, wobei das Zwischenkühlloch (100) durch einen einzelnen Herstellungsprozess oder durch zwei separate Herstellungsprozesse hergestellt wird.

11. Verfahren nach einem beliebigen vorhergehenden Anspruch, wobei ein stromabwärtiges Ende des Zwischenkühllochs (100) eine V-Form aufweist oder eine im Allgemeinen gerade Form aufweist.

## Revendications

1. Procédé de formation d'un composant (80) destiné à être utilisé dans un moteur à turbine à gaz comprenant les étapes :
(a) de détermination d'une forme souhaitée pour un trou de refroidissement (84) sur un composant de moteur à turbine à gaz (80) ;
(b) de détermination du dépôt probable d'un revêtement (110) à fournir sur le composant (80) dans le trou de refroidissement (106) ; et
(c) de formation d'un trou de refroidissement intermédiaire (100) qui a une zone agrandie à partir de la forme souhaitée pour tenir compte du dépôt du revêtement (110) ; et
(d) ensuite le revêtement du composant,
dans lequel le trou refroidi (84) de forme souhaitée comporte une section de compteur (92) communiquant avec une cavité d'air de refroidissement (191) et délivrant de l'air dans une section de diffuseur (90),
**caractérisé en ce que** :
la section de diffuseur (90) comporte une arête (98) et des parties latérales opposées (94, 96), l'arête (98) s'étendant plus près d'une surface extérieure (83) du composant que lesdites parties latérales (94, 96), de sorte que ladite arête (98) guide l'air dans lesdites parties latérales (94, 96).

2. Procédé selon la revendication 1, dans lequel ladite zone agrandie se trouve dans ladite section de diffuseur (90).

3. Procédé selon la revendication 2, dans lequel la section de compteur (92) a une section transversale généralement constante.

4. Procédé selon la revendication 3, dans lequel ladite section de compteur (92) est généralement cylindrique.

5. Procédé selon la revendication 3, dans lequel ladite section de compteur (92) a une forme de croissant.

6. Procédé selon la revendication 5, dans lequel ladite forme de croissant a des extrémités s'étendant vers le haut vers une peau externe sur le composant.

7. Procédé selon une quelconque revendication précédente, dans lequel ledit composant est destiné à être utilisé dans une section de turbine d'un moteur à turbine à gaz, par exemple une pale de turbine.

8. Procédé selon une quelconque revendication précédente, dans lequel une quantité de dépôt attendu du revêtement (110) est déterminée expérimentalement et/ou est déterminée théoriquement.

9. Procédé selon une quelconque revendication précédente, dans lequel ledit trou de refroidissement intermédiaire (100) est formé en étant percé dans une surface extérieure (78) dudit composant (80).

10. Procédé selon une quelconque revendication précédente, dans lequel le trou de refroidissement intermédiaire (100) est formé par un seul processus de fabrication ou par deux processus de fabrication séparés.

11. Procédé selon une quelconque revendication précédente, dans lequel une extrémité aval dudit trou de refroidissement intermédiaire (100) a une forme en V ou a une forme généralement droite.
